(19) Europäisches Patentamt / European Patent Office / Office européen des brevets

(11) **EP 3 872 458 A1**

(12) **EUROPÄISCHE PATENTANMELDUNG**

(43) Veröffentlichungstag:
**01.09.2021 Patentblatt 2021/35**

(21) Anmeldenummer: **20159474.4**

(22) Anmeldetag: **26.02.2020**

(51) Int Cl.:
***G01F 23/26*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Salzburger Aluminium Aktiengesellschaft**
**5651 Lend (AT)**

(72) Erfinder:
• SABATHI, Gebhard
 5620 Schwarzach im Pongau (AT)
• BERGER, Simon
 6391 Fieberbrunn (AT)

(74) Vertreter: **Weiser & Voith**
**Patentanwälte Partnerschaft**
**Kopfgasse 7**
**1130 Wien (AT)**

(54) **FÜLLSTANDSSENSOR**

(57) Die vorliegenden Erfindung betrifft einen Füllstandssensor (6) zum Messen eines Flüssigkeitsvolumens im Inneren eines Behälters (1') mit einer sich über seine Höhe (h) verändernden horizontalen Querschnittsfläche (A), umfassend einen Plattenkondensator (7) mit zwei voneinander beabstandeten Platten (7', 7") zur vertikalen Anordnung in dem Behälter (1'), dadurch gekennzeichnet, dass die Platten (7', 7") für jede Behälterhöhe (h) eine von der horizontalen Querschnittsfläche (A) auf dieser Behälterhöhe (h) abhängige Überlappungsbreite (b) und/oder einen von dieser Behälterhöhe (h) und dem Behältervolumen (V) unterhalb dieser Behälterhöhe (h) abhängigen gegenseitigen Abstand (d) haben. Die Erfindung betrifft ferner einen Behälter (1') mit einem solchen Füllstandssensor (6).

*Fig. 2*

(Forts. nächste Seite)

EP 3 872 458 A1

**Fig. 3**

**Beschreibung**

Die vorliegende Erfindung betrifft einen Füllstandssensor zum Messen eines Flüssigkeitsvolumens im Inneren eines Behälters mit einer sich über seine Höhe verändernden horizontalen Querschnittsfläche, umfassend einen Plattenkondensator mit zwei voneinander beabstandeten Platten zur vertikalen Anordnung in dem Behälter. Die Erfindung betrifft ferner einen Behälter mit einem derartigen Füllstandssensor.

Füllstandssensoren für Flüssigkeitsbehälter sind in vielen verschiedenen Ausführungsvarianten bekannt, welche unterschiedliche Messprinzipien nutzen, z.B. mit einem mechanischen Schwimmer, mit akustischem Echo an der Flüssigkeitsoberfläche etc. Bei einer kapazitiven Füllstandsmessung, welche insbesondere auf dem Gebiet von Kraftstoffbehältern gebräuchlich ist, hat der Füllstandsensor z.B. einen Plattenkondensator mit zwei voneinander beabstandeten Platten oder einen Zylinderkondensator (meist als "Rohr-in-Rohr"-Kondensator) mit jeweils einem Spalt zwischen den beiden Platten bzw. Rohren. Dabei wird ausgenutzt, dass die Flüssigkeit im Behälter eine von oberhalb davon im Behälter befindlichem Gas verschiedene Dielektrizitätskonstante aufweist. Wird folglich der Kondensator im Behälter angeordnet, füllen je nach Füllstand im Inneren des Behälters die Flüssigkeit und das Gas als Dielektrika den Spalt zwischen den beiden Platten bzw. Rohren, sodass durch Messung der vom Verhältnis von Flüssigkeit zu Gas im Spalt abhängigen Kapazität des Kondensators der Füllstand ermittelt werden kann. Für diese Messung hat der Füllstandssensor eine elektrische Auswerteschaltung oder ist an eine solche angeschlossen.

Im Allgemeinen interessiert anstelle des Füllstandes das Flüssigkeitsvolumen im Inneren des Behälters. Hat der Behälter eine über seine Höhe gleichbleibende horizontale Querschnittsfläche, wie z.B. bei einem geraden quaderförmigen Behälter, ist der so ermittelte Füllstand, d.h. die Höhe des Flüssigkeitspegels, proportional dem Flüssigkeitsvolumen im Inneren des Behälters; der Messwert der Auswerteschaltung kann direkt als Flüssigkeitsvolumen zur Anzeige gebracht werden.

Um einen gegebenen Bauraum besser auszunutzen bzw. zur einfacheren thermischen Isolation und/oder höheren Druckfestigkeit des Behälters, haben Flüssigkeitsbehälter heute oftmals eine sich über ihre Höhe verändernde horizontale Querschnittsfläche und dabei z.B. die Form eines liegenden Kreiszylinders od.dgl. In solchen Fällen kann aus der von der Auswerteschaltung ermittelten Kapazität des Füllstandssensors, welche dem Füllstand proportional ist, nicht mehr präzise auf das Flüssigkeitsvolumen im Inneren des Behälters geschlossen werden, da das Flüssigkeitsvolumen dem Füllstand nicht proportional ist. Um dennoch eine Information über das Flüssigkeitsvolumen im Behälter zu erhalten und zur Anzeige bringen zu können, wird dieses entweder einfach durch den ermittelten Füllstand grob angenähert, oder es muss das von der Auswerteschaltung ermittelte Messergebnis des Füllstandes unter Kenntnis der Behältergeometrie für die Anzeige des Flüssigkeitsvolumens umgerechnet werden. Der grobe Näherungswert des erstgenannten Falls ist für viele Anwendungen zu wenig präzise; andererseits stellt die Umrechnung im zweitgenannten Fall einen Zusatzaufwand dar und schafft eine zusätzliche mögliche Fehlerquelle, da meist der Füllstandssensor und manchmal die Auswerteschaltung im bzw. am Behälter vormontiert sind, wogegen zumindest die Anzeige aus anderer Quelle stammt und erst beim Einbau des Behälters an seinem Bestimmungsort mit diesem kombiniert wird, sodass aus einer falschen Kombination eine dauerhaft fehlerhafte Anzeige resultiert.

Die Erfindung setzt sich zum Ziel, einen Füllstandssensor und einen Behälter mit einem solchen Füllstandssensor zu schaffen, welcher ein einfaches und präzises Messen eines Flüssigkeitsvolumens im Inneren des Behälters ermöglicht und Fehler weitgehend ausschließen lässt.

Das Ziel wird gemäß einem ersten Aspekt der Erfindung mit einem Füllstandssensor der einleitend genannten Art erreicht, welcher sich dadurch auszeichnet, dass die Platten für jede Behälterhöhe eine von der horizontalen Querschnittsfläche auf dieser Behälterhöhe abhängige Überlappungsbreite und/oder einen von dieser Behälterhöhe und dem Behältervolumen unterhalb dieser Behälterhöhe abhängigen gegenseitigen Abstand haben.

Durch die Kapazität des Plattenkondensators mit derartigen Platten lässt sich das Flüssigkeitsvolumen im Inneren des Behälters präziser messen als durch eine bloße Füllstandsmessung, sodass sich ein nachträgliches Umrechnen anhand der Behältergeometrie erübrigt. Der Füllstandssensor wird z.B. unmittelbar beim Bau des Behälters darin vertikal angeordnet und kann verwechslungssicher im Behälter verbleiben. Eine Auswerteschaltung, welche Teil des Füllstandssensors sein kann bzw. an diesen angeschlossen wird, ist unabhängig vom Behälter und seiner Geometrie und somit ebenfalls verwechslungssicher. Die Messung des Flüssigkeitsvolumens im Inneren des Behälters ist auf diese Weise einfach und dabei präziser und wesentlich weniger fehleranfällig als bei herkömmlichen Füllstandssensoren.

Es sei angemerkt, dass, wenn die beiden Platten des Plattenkondensators kongruent sind und einander vollständig überlappen, die Überlappungsbreite für jede Behälterhöhe der Plattenbreite für diese Behälterhöhe entspricht.

Eine besonders einfache Ausführungsform, bei welcher die Platten über die Behälterhöhe konstanten gegenseitigen Abstand haben, ergibt sich vorteilhaft dadurch, dass die Platten für jede Behälterhöhe eine Überlappungsbreite haben, die der horizontalen Querschnittsfläche auf dieser Behälterhöhe proportional ist. Auch bei komplexen Behältergeometrien führt eine derartige Überlappungsbreite der Platten des Plattenkondensators zu einem präzisen Messens des Flüssigkeitsvolumens im Inneren des Behälters.

Eine günstige Variante dazu ergibt sich, wenn die Platten für jede Behälterhöhe eine Überlappungsbreite gemäß

$$b(h) = \frac{m \cdot d}{\varepsilon_0 \cdot \left(\varepsilon_{r,F} - \varepsilon_{r,G}\right)} \cdot A(h)$$

haben, mit:

b(h)    Überlappungsbreite der Platten auf der Behälterhöhe h,
A(h)    horizontale Querschnittsfläche des Behälters auf der Behälterhöhe h,
d        gegenseitiger Abstand der Platten,
$\varepsilon_0$        Dielektrizitätskonstante des Vakuums,
$\varepsilon_{r,G}$     Dielektrizitätskonstante des Behälterinneren oberhalb des Flüssigkeitsvolumens,
$\varepsilon_{r,F}$     Dielektrizitätskonstante des Flüssigkeitsvolumens, und
m        ein Skalierungsfaktor.

Dies ermöglicht, einen vollständig linearen Zusammenhang zwischen der Kapazität des Plattenkondensators und dem Flüssigkeitsvolumen im Inneren des Behälters zu schaffen. Durch Wahl des Skalierungsfaktors ist ferner die Empfindlichkeit des Füllstandssensors einstellbar.

Eine alternative Ausführungsform des Füllstandssensors ergibt sich für den Fall, dass die Platten des Plattenkondensators über die Behälterhöhe konstante Überlappungsbreite und dabei die Platten für jede Behälterhöhe einen gegenseitigen Abstand haben, der mit einem Quotienten aus dieser Behälterhöhe und dem Behältervolumen unterhalb dieser Behälterhöhe korreliert. Auch in diesem Fall führt die Form des Plattenkondensators - hier: der gegenseitige Abstand seiner Platten auf jeder Höhe - selbst bei komplexen Behältergeometrien zu einem präzisen Messergebnis des Flüssigkeitsvolumens im Inneren des Behälters. Dazu können z.B. auch bei einem bestehenden Behälter die Platten des Plattenkondensators nachträglich verformt und so ein Plattenkondensator der genannten Art geschaffen werden.

Besonders günstig ist es dabei, wenn die Platten für jede Behälterhöhe einen gegenseitigen Abstand gemäß

$$d(h) = \frac{\varepsilon_0 \cdot \varepsilon_{r,G} \cdot b \cdot H + \varepsilon_0 \cdot \left(\varepsilon_{r,F} - \varepsilon_{r,G}\right) \cdot b \cdot h}{n + m \cdot V(h)}$$

haben, mit:

d(h)    gegenseitiger Abstand der Platten auf der Behälterhöhe h,
V(h)    Behältervolumen unterhalb der Behälterhöhe h,
b        Überlappungsbreite der Platten,
h        Behälterhöhe,
H        maximale Behälterhöhe,
$\varepsilon_0$        Dielektrizitätskonstante des Vakuums,
$\varepsilon_{r,G}$     Dielektrizitätskonstante des Behälterinneren oberhalb des Flüssigkeitsvolumens,
$\varepsilon_{r,F}$     Dielektrizitätskonstante des Flüssigkeitsvolumens,
n        ein Offset, und
m        ein Skalierungsfaktor.

Auch dadurch lässt sich ein linearer Zusammenhang zwischen dem Füllstandssensor-Messwert und dem Flüssigkeitsvolumen erzielen. Ferner sind ein Offset und - über den Skalierungsfaktor - die Empfindlichkeit des Füllstandsensors einstellbar.

Eine weitere, allgemeine Ausführungsform des Füllstandssensors ergibt sich vorteilhaft, wenn die Platten für jede Behälterhöhe ein Verhältnis von Überlappungsbreite zu gegenseitigem Abstand haben, das mit einem Quotienten aus dem Behältervolumen unterhalb dieser Behälterhöhe und dieser Behälterhöhe korreliert. Dies ermöglicht eine größere Freiheit bei der Gestaltung des Plattenkondensators und somit eine Anpassung an weitere Bedingungen, z.B. an den im Inneren des Behälters zur Verfügung stehenden Raum etc.

Dabei ist es besonders günstig, wenn die Platten für jede Behälterhöhe ein Verhältnis von Überlappungsbreite zu gegenseitigem Abstand gemäß

$$\frac{b(h)}{d(h)} = \frac{n + m \cdot V(h)}{\varepsilon_0 \cdot \varepsilon_{r,G} \cdot H + \varepsilon_0 \cdot \left(\varepsilon_{r,F} - \varepsilon_{r,G}\right) \cdot h}$$

haben, mit:

$b(h)$     Überlappungsbreite der Platten auf der Behälterhöhe h,
$d(h)$     gegenseitiger Abstand der Platten auf der Behälterhöhe h,
$V(h)$     Behältervolumen unterhalb der Behälterhöhe h,
$h$     Behälterhöhe,
$H$     maximale Behälterhöhe,
$\varepsilon_0$     Dielektrizitätskonstante des Vakuums,
$\varepsilon_{r,G}$     Dielektrizitätskonstante des Behälterinneren oberhalb des Flüssigkeitsvolumens,
$\varepsilon_{r,F}$     Dielektrizitätskonstante des Flüssigkeitsvolumens,
$n$     ein Offset, und
$m$     ein Skalierungsfaktor.

Auch dadurch ist ein linearer Zusammenhang zwischen dem Füllstandssensor-Messwert und dem Flüssigkeitsvolumen im Behälter erzielbar; wieder sind ein Offset und über den Skalierungsfaktor die Empfindlichkeit des Füllstandssensors einstellbar.

Gemäß einem zweiten Aspekt schafft die Erfindung einen Behälter mit einer sich über seine Höhe verändernden horizontalen Querschnittsfläche und einem in seinem Inneren im Wesentlichen vertikal angeordneten Füllstandssensor der vorgenannten Art. Bezüglich der Vorteile und weiterer Varianten eines solchen Behälters wird auf die vorangegangenen Ausführungen zum Füllstandssensor verwiesen.

Die Erfindung wird nachfolgenden anhand von in den beigeschlossenen Zeichnungen dargestellten Ausführungsbeispielen näher erläutert. In den Zeichnungen zeigen:

die Fig. 1a und 1b einen Behälter in einer Perspektivansicht von schräg oben (Fig. la) und, für den Behälter von Fig. la, den Zusammenhang zwischen seinem Behältervolumen jeweils unterhalb einer Behälterhöhe und der Behälterhöhe in einem Diagramm (Fig. 1b); und

die Fig. 2 - 5 jeweils eine erfindungsgemäße Variante eines Behälters mit einem Füllstandssensor in einer ausschnittsweisen Perspektivansicht von schräg oben.

Fig. la zeigt einen Behälter 1 mit einer Flüssigkeit 2 in seinem Inneren. Im dargestellten Beispiel ist der Behälter 1 ein liegender Kreiszylinder. Somit ist auf einer Höhe $h_1$ im Inneren des Behälters 1 eine horizontale Querschnittsfläche A - hier: $A(h_1)$ - des Behälters 1 kleiner als die horizontale Querschnittsfläche $A(h_2)$ auf einer Höhe $h_2$ und diese wiederum größer als die horizontale Querschnittsfläche $A(h_3)$ auf einer Höhe $h_3$ im Inneren des Behälters 1. Der Behälter 1 hat somit eine sich über seine Höhe h verändernde horizontale Querschnittsfläche A. Die horizontale Querschnittsfläche A auf der Behälterhöhe $h_1$, bis zu welcher sich in diesem Beispiel die Flüssigkeit 2 und oberhalb welcher sich Gas 3 in dem Behälter 1 befinden, bildet somit zugleich eine Oberfläche 4 der Flüssigkeit 2; das unterhalb dieser Behälterhöhe $h_1$, d.h. unterhalb der horizontalen Querschnittsfläche $A(h_1)$, liegende Behältervolumen V - hier: $V(h_1)$ - entspricht dem Flüssigkeitsvolumen im Inneren des Behälters 1. Der Behälterdurchmesser ist zugleich eine maximale Höhe H im Inneren des Behälters 1.

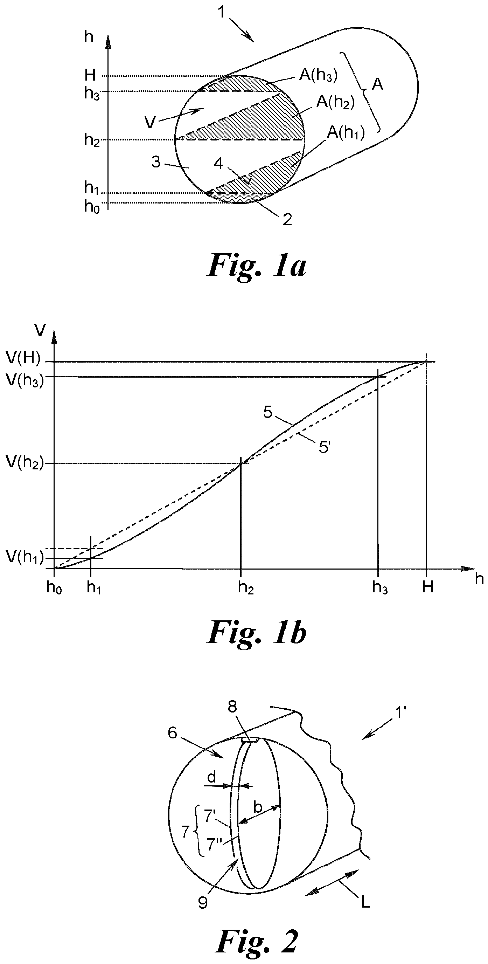

Eine durchgezogene Linie 5 in Fig. 1b illustriert für den Behälter 1 von Fig. la den Zusammenhang zwischen jenem Behältervolumen $V(h)$, welches sich jeweils unterhalb einer Behälterhöhe h befindet, und dieser Behälterhöhe h. Aufgrund der sich über die Behälterhöhe h verändernden horizontalen Querschnittsfläche A des Behälters 1 ist der Verlauf der Linie 5 nicht gerade, sondern hier S-förmig. Dies zeigt auch ein Vergleich mit der strichlierten Gerade 5', welche einem auf das maximale Volumen V bei maximaler Höhe H normierten Füllstand des Behälters 1 entspricht.

Im Einzelnen schneiden einander im Beispiel der Fig. 1b die Linie 5 und die Gerade 5' auf den Höhen h = 0, h = H, sowie bei halber Höhe $h = h_2$ im Inneren des Behälters 1. Deutliche Abweichungen zwischen der Linie 5 und der Geraden 5' ergeben sich hingegen beispielsweise für ein Behältervolumen $V(h_1)$ unterhalb einer Behälterhöhe $h_1$ oder für ein Behältervolumen $V(h_3)$ unterhalb einer Behälterhöhe $h_3$, welche jeweils auch in Fig. la verzeichnet sind. So entspricht z.B. das genannte Behältervolumen $V(h_1)$ unterhalb der Behälterhöhe $h_1$ lediglich etwa 50 % des (normierten) Vergleichswerts für den Füllstand (Gerade 5') auf derselben Höhe $h_1$. Eine Abschätzung des Flüssigkeitsvolumens im Behälterinneren anhand des (normierten) Werts für den Füllstand, welche in der Praxis häufig vorgenommen wird, läge bei diesem Füllstand somit um rund 100% über dem tatsächlichen Wert des Flüssigkeitsvolumens.

Hat der Behälter 1 eine zur in Fig. la dargestellten kreiszylindrischen Form alternative Form mit einer sich über seine Höhe h verändernden horizontalen Querschnittsfläche A, ergibt sich ein anderer nichtlinearer Zusammenhang zwischen Behältervolumen V und Höhe h.

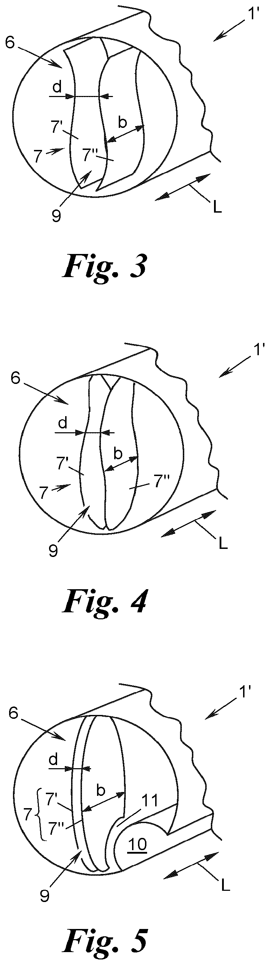

Die Beispiele der Fig. 2 - 4 zeigen einen dem Behälter 1 von Fig. la formgleichen Behälter 1' (zur besseren Sichtbarkeit: ohne Flüssigkeit 2); das Beispiel der Fig. 5 zeigt einen Behälter 1' anderer Form mit sich über seine Höhe h verändernder horizontaler Querschnittsfläche A. Die Behälter 1' der Beispiele der Fig. 2 - 5 haben zum Messen des Flüssigkeitsvolumens im Behälterinneren jeweils einen Füllstandssensor 6, welcher einen Plattenkondensator 7 mit zwei voneinander beabstandeten Platten 7', 7" umfasst, die im Inneren des Behälters 1' vertikal angeordnet sind. Optional umfasst der Füllstandssensor 6 ferner eine Verankerung 8 für den Plattenkondensator 7 an dem Behälter 1' und/oder eine an den Plattenkondensator 7 angeschlossene elektrische Auswerteschaltung (nicht gezeigt).

In allen Ausführungsformen und Varianten des Behälters 1' bzw. des Füllstandssensors 6 verbleibt zwischen den Platten 7', 7" jeweils ein Spalt 9, in welchen eine im Behälter 1' vorhandene Flüssigkeit 2 und ein oberhalb des Flüssigkeitsvolumens im Behälterinneren allenfalls vorhandenes Gas 3 eindringen. Aufgrund unterschiedlicher Dielektrizitätskonstanten der Flüssigkeit 2, d.h. des Flüssigkeitsvolumens, und des Gases 3, d.h. des Behälterinneren oberhalb des Flüssigkeitsvolumens, lässt sich von einer gemessenen Kapazität des Plattenkondensators 7 auf den Füllstand bzw. - mit dem Füllstandssensor 6 einer der im Folgenden näher beschriebenen Ausführungsformen bzw. Varianten - auf das Flüssigkeitsvolumen im Behälterinneren schliessen. Dazu decken die Platten 7', 7" des Plattenkondensators 7 die maximale Höhe H des Inneren des Behälters 1' weitgehend ab, wie dem Fachmann bekannt, d.h. sie reichen - abgesehen von einem üblichen (geringen) Abstand von der Behälterwandung - von seinem Boden auf der Höhe h = 0 bis zu seiner maximalen Höhe H. Die Platten 7', 7" können dabei z.B. quer, schräg oder parallel zu einer Längsrichtung L des Behälters 1' ausgerichtet sein.

In einer ersten, in Fig. 2 gezeigten Ausführungsform haben die Platten 7', 7" für jede Behälterhöhe h eine von der horizontalen Querschnittsfläche A auf dieser Behälterhöhe h abhängige Überlappungsbreite b. Da die voneinander beabstandeten Platten 7', 7" einander hier vollständig überlappen, d.h. einander kongruent gegenüberliegen, ist die Überlappungsbreite b in diesem optionalen Beispiel identisch mit der Breite der Platten 7', 7"; alternativ überlappen die Platten 7', 7" einander nicht vollständig, sodass die Überlappungsbreite b von der Plattenbreite abweicht. Insbesondere haben die Platten 7', 7" in diesem Beispiel über die Behälterhöhe h konstanten gegenseitigen Abstand d und für jede Behälterhöhe h eine Überlappungsbreite b, welche der horizontalen Querschnittsfläche A auf dieser Behälterhöhe h proportional ist; d.h. für jede Behälterhöhe h gilt, dass die Überlappungsbreite b und die horizontale Querschnittsfläche A auf dieser Behälterhöhe h in demselben Verhältnis zueinander stehen.

Optional können die Platten 7', 7" dabei insbesondere für jede Behälterhöhe h eine Überlappungsbreite b gemäss

$$b(h) = \frac{m \cdot d}{\varepsilon_0 \cdot \left(\varepsilon_{r,F} - \varepsilon_{r,G}\right)} \cdot A(h) \qquad \text{Gleichung (1)}$$

haben, mit der Überlappungsbreite b(h) der Platten 7', 7" auf der Behälterhöhe h, der horizontalen Querschnittsfläche A(h) des Behälters 1' auf der Behälterhöhe h, dem (hier konstanten) gegenseitigen Abstand d der Platten 7', 7", einer Dielektrizitätskonstante $\varepsilon_0$ des Vakuums, einer Dielektrizitätskonstante $\varepsilon_{r,G}$ des Behälterinneren oberhalb des Flüssigkeitsvolumens, einer Dielektrizitätskonstante $\varepsilon_{r,F}$ des Flüssigkeitsvolumens und einem Skalierungsfaktor m.

Die im Beispiel der Fig. 2 dargestellten Platten 7', 7" haben etwa ovale Form; alternativ können die Platten 7', 7" jede andere geeignete Form haben, z.B. sichel- oder S-förmig geschwungen sein und/oder Öffnungen haben, sodass die Platten 7', 7" beispielsweise zugleich als Schwallwände im Inneren des Behälters 1' dienen können.

Fig. 3 illustriert eine zur ersten alternative zweite Ausführungsform, bei welcher die Platten 7', 7" für jede Behälterhöhe h einen gegenseitigen Abstand d haben, welcher von dieser Behälterhöhe h und dem Behältervolumen V unterhalb dieser Behälterhöhe h abhängt. Dabei haben die Platten 7', 7" des Plattenkondensators 7 in diesem Beispiel über die Behälterhöhe h konstante Überlappungsbreite b, d.h. hier angesichts der wieder vollständigen Überlappung der Platten 7', 7" konstante Plattenbreite. Insbesondere haben die Platten 7', 7" für jede Behälterhöhe h einen gegenseitigen Abstand d, welcher mit einem Quotienten aus dieser Behälterhöhe h und dem Behältervolumen V unterhalb dieser Behälterhöhe h korreliert; d.h., dass der gegenseitige Abstand d der Platten 7', 7" zunimmt, wenn sich der genannte Quotient vergrössert, und umgekehrt.

In einer optionalen Variante dazu haben die Platten 7', 7" für jede Behälterhöhe h einen gegenseitigen Abstand d gemäss

$$d(h) = \frac{\varepsilon_0 \cdot \varepsilon_{r,G} \cdot b \cdot H + \varepsilon_0 \cdot \left(\varepsilon_{r,F} - \varepsilon_{r,G}\right) \cdot b \cdot h}{n + m \cdot V(h)} \qquad \text{Gleichung (2)}$$

mit dem gegenseitigen Abstand d(h) der Platten 7', 7" auf der Behälterhöhe h, dem Behältervolumen V(h) unterhalb der Behälterhöhe h, der (hier konstanten) Überlappungsbreite b der Platten 7', 7", der jeweiligen Behälterhöhe h, der maximalen Behälterhöhe H, wieder den Dielektrizitätskonstanten $\varepsilon_0$ (des Vakuums), $\varepsilon_{r,G}$ (des Behälterinneren oberhalb des Flüssigkeitsvolumens) und $\varepsilon_{r,F}$ (des Flüssigkeitsvolumens), einem Offset n und dem Skalierungsfaktor m.

Es sei in diesem Zusammenhang angemerkt, dass in Fig. 3 der Plattenabstand d nicht maßstäblich sondern besonders deutlich dargestellt ist.

In einer allgemeinen, in Fig. 4 dargestellten dritten Ausführungsform des Füllstandssensors 6 haben die Platten 7', 7" des Plattenkondensators 7 über die Behälterhöhe h weder konstante Überlappungsbreite b noch konstanten gegenseitigen Abstand d. Vielmehr haben die Platten 7', 7" für jede Behälterhöhe h eine von der horizontalen Querschnittsfläche A auf dieser Behälterhöhe h abhängige Überlappungsbreite b und einen von dieser Behälterhöhe h und dem Behältervolumen V unterhalb dieser Behälterhöhe h abhängigen gegenseitigen Abstand d. Dabei können insbesondere die Platten 7', 7" für jede Behälterhöhe h ein Verhältnis von Überlappungsbreite b zu gegenseitigem Abstand d haben, das mit einem Quotienten aus dem Behältervolumen V unterhalb dieser Behälterhöhe h und dieser Behälterhöhe h korreliert. Eine solche Situation ist durch die Platten 7', 7" des Plattenkondensators 7 in Fig. 4 versinnbildlicht. Das Verhältnis von Überlappungsbreite b zu gegenseitigem Abstand d der Platten 7', 7" ist in einer Variante dieser Ausführungsform für jede Behälterhöhe h durch

$$\frac{b(h)}{d(h)} = \frac{n + m \cdot V(h)}{\varepsilon_0 \cdot \varepsilon_{r,G} \cdot H + \varepsilon_0 \cdot \left(\varepsilon_{r,F} - \varepsilon_{r,G}\right) \cdot h} \qquad \text{Gleichung (3)}$$

gegeben, wieder mit der Überlappungsbreite b(h) der Platten 7', 7" auf der Behälterhöhe h, dem gegenseitigen Abstand d(h) der Platten 7', 7" auf der Behälterhöhe h, dem Behältervolumen V(h) unterhalb der Behälterhöhe h, der jeweiligen Behälterhöhe h, der maximalen Behälterhöhe H, den Dielektrizitätskonstanten $\varepsilon_0$ (des Vakuums), $\varepsilon_{r,G}$ (des Behälterinneren oberhalb des Flüssigkeitsvolumens) und $\varepsilon_{r,F}$ (des Flüssigkeitsvolumens), dem Offset n und dem Skalierungsfaktor m.

Gleichung (3) stellt eine verallgemeinerte Form der Gleichungen (1) und (2) dar. Die Gleichungen (1) und (2) lassen sich aus Gleichung (3) unter den Bedingungen der genannten ersten bzw. zweiten Ausführungsform herleiten. Im Fall der zweiten Ausführungsform gilt, dass die Überlappungsbreite b der Platten 7', 7" über die Höhe h des Behälters 1' konstant ist. Im Fall der ersten Ausführungsform gilt, dass der gegenseitige Abstand d der Platten 7', 7" über die Höhe h des Behälters 1' konstant und dass

$$V(h) = \int_0^H A(h)\,dh \qquad \text{Gleichung (4)}$$

ist, wieder mit dem Behältervolumen V(h) unterhalb der Behälterhöhe h, der horizontalen Querschnittsfläche A(h) des Behälters 1' auf der Behälterhöhe h, der Behälterhöhe h und der maximalen Behälterhöhe H.

Fig. 5 zeigt eine Variante des Füllstandssensors 6 der in Fig. 2 gezeigten ersten Ausführungsform, bei welcher der Behälter 1' eine andere Form als im Beispiel der Fig. 2 hat, nämlich nicht durchwegs kreiszylindrisch ist, sondern in Längsrichtung L einen Innenvorsprung 10 hat. Der Innenvorsprung 10 des Behälters 1' von Fig. 5 führt bei einem Plattenkondensator 7 mit den zuvor unter Bezugnahme auf Fig. 2 beschriebenen Eigenschaften zu einer Einbuchtung 11 an den Platten 7', 7" bzw. in deren gegenseitiger Überlappung.

Es versteht sich, dass der Behälter 1' des Beispiels der Fig. 5 alternativ mit einem Plattenkondensator 7 mit den zuvor unter Bezugnahme auf Fig. 3 bzw. 4 beschriebenen Eigenschaften ausgestattet sein kann, sodass der Innenvorsprung 10 des Behälters 1' zu entsprechenden Formen, d.h. Überlappungsbreiten b bzw. Plattenbreiten und/oder gegenseitigen Abständen d, der Platten 7', 7" bzw. des Plattenkondensators 7 führt. Ferner sind andere Formen des Behälters 1' mit einer sich über seine Höhe h verändernden horizontalen Querschnittsfläche A alternativ möglich, z.B. Prismenform, Kugelform usw. usf., und haben entsprechende Auswirkung auf die Form des jeweiligen Plattenkondensators 7.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

**Patentansprüche**

1. Füllstandssensor zum Messen eines Flüssigkeitsvolumens im Inneren eines Behälters (1') mit einer sich über seine Höhe (h) verändernden horizontalen Querschnittsfläche (A), umfassend einen Plattenkondensator (7) mit zwei voneinander beabstandeten Platten (7', 7") zur vertikalen Anordnung in dem Behälter (1'), **dadurch gekennzeichnet, dass** die Platten (7', 7") für jede Behälterhöhe (h) eine von der horizontalen Querschnittsfläche (A) auf dieser Behälterhöhe (h) abhängige Überlappungsbreite (b) und/oder einen von dieser Behälterhöhe (h) und dem Behältervolumen (V) unterhalb dieser Behälterhöhe (h) abhängigen gegenseitigen Abstand (d) haben.

2. Füllstandssensor nach Anspruch 1 mit über die Behälterhöhe (h) konstantem gegenseitigem Abstand (d) der Platten (7', 7"), **dadurch gekennzeichnet, dass** die Platten (7', 7") für jede Behälterhöhe (h) eine Überlappungsbreite (b) haben, die der horizontalen Querschnittsfläche (A) auf dieser Behälterhöhe (h) proportional ist.

3. Füllstandssensor nach Anspruch 2, **dadurch gekennzeichnet, dass** die Platten (7', 7") für jede Behälterhöhe (h) eine Überlappungsbreite (b) gemäß

$$b(h) = \frac{m \cdot d}{\varepsilon_0 \cdot \left( \varepsilon_{r,F} - \varepsilon_{r,G} \right)} \cdot A(h)$$

haben, mit:

b(h) Überlappungsbreite der Platten (7', 7") auf der Behälterhöhe h,
A(h) horizontale Querschnittsfläche des Behälters (1') auf der Behälterhöhe h,
d gegenseitiger Abstand der Platten (7', 7"),
$\varepsilon_0$ Dielektrizitätskonstante des Vakuums,
$\varepsilon_{r,G}$ Dielektrizitätskonstante des Behälterinneren oberhalb des Flüssigkeitsvolumens,
$\varepsilon_{r,F}$ Dielektrizitätskonstante des Flüssigkeitsvolumens, und
m ein Skalierungsfaktor.

4. Füllstandssensor nach Anspruch 1 mit über die Behälterhöhe (h) konstanter Überlappungsbreite (b) der Platten (7', 7"), **dadurch gekennzeichnet, dass** die Platten (7', 7") für jede Behälterhöhe (h) einen gegenseitigen Abstand (d) haben, der mit einem Quotienten aus dieser Behälterhöhe (h) und dem Behältervolumen (V) unterhalb dieser Behälterhöhe (h) korreliert.

5. Füllstandssensor nach Anspruch 4, **dadurch gekennzeichnet, dass** die Platten (7', 7") für jede Behälterhöhe (h) einen gegenseitigen Abstand (d) gemäß

$$d(h) = \frac{\varepsilon_0 \cdot \varepsilon_{r,G} \cdot b \cdot H + \varepsilon_0 \cdot \left( \varepsilon_{r,F} - \varepsilon_{r,G} \right) \cdot b \cdot h}{n + m \cdot V(h)}$$

haben, mit:

d(h) gegenseitiger Abstand der Platten (7', 7") auf der Behälterhöhe h,
V(h) Behältervolumen unterhalb der Behälterhöhe h,
b Überlappungsbreite der Platten (7', 7"),
h Behälterhöhe,
H maximale Behälterhöhe,
$\varepsilon_0$ Dielektrizitätskonstante des Vakuums,
$\varepsilon_{r,G}$ Dielektrizitätskonstante des Behälterinneren oberhalb des Flüssigkeitsvolumens,
$\varepsilon_{r,F}$ Dielektrizitätskonstante des Flüssigkeitsvolumens,
n ein Offset, und
m ein Skalierungsfaktor.

6. Füllstandssensor nach Anspruch 1, **dadurch gekennzeichnet, dass** die Platten (7', 7") für jede Behälterhöhe (h)

ein Verhältnis von Überlappungsbreite (b) zu gegenseitigem Abstand (d) haben, das mit einem Quotienten aus dem Behältervolumen (V) unterhalb dieser Behälterhöhe (h) und dieser Behälterhöhe (h) korreliert.

7. Füllstandssensor nach Anspruch 6, **dadurch gekennzeichnet, dass** die Platten (7', 7") für jede Behälterhöhe (h) ein Verhältnis von Überlappungsbreite (b) zu gegenseitigem Abstand (d) gemäß

$$\frac{b(h)}{d(h)} = \frac{n + m \cdot V(h)}{\varepsilon_0 \cdot \varepsilon_{r,G} \cdot H + \varepsilon_0 \cdot \left(\varepsilon_{r,F} - \varepsilon_{r,G}\right) \cdot h}$$

haben, mit:

b(h) Überlappungsbreite der Platten (7', 7") auf der Behälterhöhe h,
d(h) gegenseitiger Abstand der Platten (7', 7") auf der Behälterhöhe h,
V(h) Behältervolumen unterhalb der Behälterhöhe h,
h Behälterhöhe,
H maximale Behälterhöhe,
$\varepsilon_0$ Dielektrizitätskonstante des Vakuums,
$\varepsilon_{r,G}$ Dielektrizitätskonstante des Behälterinneren oberhalb des Flüssigkeitsvolumens,
$\varepsilon_{r,F}$ Dielektrizitätskonstante des Flüssigkeitsvolumens,
n ein Offset, und
m ein Skalierungsfaktor.

8. Behälter mit einer sich über seine Höhe verändernden horizontalen Querschnittsfläche (A) und einem in seinem Inneren im Wesentlichen vertikal angeordneten Füllstandssensor (6) nach einem der Ansprüche 1 bis 7.

*Fig. 1a*

*Fig. 1b*

*Fig. 2*

**Fig. 3**

**Fig. 4**

**Fig. 5**

**Europäisches Patentamt**
**European Patent Office**
**Office européen des brevets**

# EUROPÄISCHER RECHERCHENBERICHT

Nummer der Anmeldung

EP 20 15 9474

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 99/67604 A1 (CORDANT TECH INC [US]) 29. Dezember 1999 (1999-12-29) * Seite 30, Zeile 1 - Seite 32, Zeile 11 * * Abbildungen 5,6 * * Anspruch 17 * ----- | 1-8 | INV. G01F23/26 |
| X | FR 2 691 537 A1 (MARELLI AUTRONICA [FR]) 26. November 1993 (1993-11-26) * Abbildungen 2, 4 * * Anspruch 1 * ----- | 1 | |

**RECHERCHIERTE SACHGEBIETE (IPC)**

G01F

Der vorliegende Recherchenbericht wurde für alle Patentansprüche erstellt

| Recherchenort | Abschlußdatum der Recherche | Prüfer |
|---|---|---|
| Den Haag | 1. September 2020 | Rambaud, Patrick |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 15 9474

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-09-2020

| Im Recherchenbericht angeführtes Patentdokument | Datum der Veröffentlichung | Mitglied(er) der Patentfamilie | Datum der Veröffentlichung |
|---|---|---|---|
| WO 9967604 A1 | 29-12-1999 | AU 4717799 A<br>WO 9967604 A1 | 10-01-2000<br>29-12-1999 |
| FR 2691537 A1 | 26-11-1993 | KEINE | |

Für nähere Einzelheiten zu diesem Anhang : siehe Amtsblatt des Europäischen Patentamts, Nr.12/82